**Europäisches Patentamt**

**European Patent Office**

**Office européen des brevets**

(19)

(11) Numéro de publication: **0 130 263**
**B1**

(12) **FASCICULE DE BREVET EUROPEEN**

(45) Date de publication du fascicule du brevet:
01.06.88

(51) Int. Cl.⁴: **H 04 B 3/23**

(21) Numéro de dépôt: 83430023.8

(22) Date de dépôt: 30.06.83

(54) Procédé d'initialisation d'un filtre annuleur d'écho et système de communication utilisant ledit procédé.

(43) Date de publication de la demande:
09.01.85 Bulletin 85/2

(45) Mention de la délivrance du brevet:
01.06.88 Bulletin 88/22

(84) Etats contractants désignés:
DE FR GB

(56) Documents cités:
EP - A - 0 096 936
EP - A - 0 113 487
EP - A - 0 116 387
EP - A - 0 117 596
DE - A - 3 116 817
FR - A - 2 337 465
GB - A - 2 029 175
US - A - 3 864 632
US - A - 3 935 535
US - A - 4 027 258

IBM TECHNICAL DISCLOSURE BULLETIN, vol. 21, no. 5, octobre 1978, p. 1916-1918, New York, US, A. DESBLACHE et al.: "Centering transversal equalizer tap coefficients"

(73) Titulaire: **International Business Machines Corporation, Old Orchard Road, Armonk, N.Y. 10504 (US)**
(84) Etats contractants désignés: **DE GB**

(73) Titulaire: **Compagnie IBM FRANCE, 5 Place Vendôme, F-75000 Paris 1er (FR)**
(84) Etats contractants désignés: **FR**

(72) Inventeur: **Desblache, André, Le Petit Royaume Chemin du Col de l'Espagnol, F-06000 Nice (FR)**
Inventeur: **Galand, Claude, 56, Avenue des Tuilières, F-06800 Cagnes sur Mer (FR)**
Inventeur: **Vermot-Gauchy, Robert, Domaine des Gardettes, F-06570 Saint Paul (FR)**

(74) Mandataire: **Tubiana, Max, Compagnie IBM France Département de Propriété Industrielle, F-06610 La Gaude (FR)**

# Description

Domaine de l'Invention

L'invention se situe dans le domaine des communications téléphoniques. Elle est plus particulièrement orientée vers l'élimination des perturbations des liaisons téléphoniques par les phénomènes dits d'écho.

Etat de la technique

La liaison entre deux abonnés au réseau téléphonique se fait souvent pour partie sur une ligne bifilaire bi-directionnelle et pour partie sur deux lignes bifilaires unidirectionnelles. Le trajet entre deux abonnés est donc pourvu en certains endroits de dispositifs de conversion 2 fils/4 fils et inversement, dispositifs dits transformateurs hybrides. L'inconvénient de ces dispositifs tient au fait qu'il ne séparent qu'imparfaitement l'une de l'autre, les deux voies unidirectionnelles et, sont donc à l'origine de phénomènes d'écho. L'imperfection du fonctionnement du transformateur hybride est essentiellement due à une désadaptation de sa charge.

La suppression des perturbations dues aux échos se fait en général par l'utilisation de moyens qui analysent le signal d'une des voies unidirectionnelles pour construire dynamiquement une réplique d'écho, laquelle réplique est ensuite soustraite du signal perturbé. En principe, le signal à analyser doit être d'autant plus long que le trajet de l'écho est lui-même long. D'autre part, l'analyse du signal et la construction de la réplique se font en général à l'aide de filtres numériques auto-adaptatifs. Donc plus le signal à analyser est long, plus la ligne à retard ou mémoire du filtre numérique doit être importante. Ce qui déjà représente en soi un inconvénient pratique. En outre, plus le filtre est long, plus le nombre de ses coefficients est élevé. Il faut donc une puissance de calcul importante pour réaliser les opérations de filtrage proprement dites, et à cela vient s'ajouter la puissance nécessaire à la réalisation des opérations d'auto-adaptation du filtre.

Dans un réseau téléphonique utilisant des auto-commutateurs, les caractéristiques de charge des transformateurs hybrides sont différentes pour chaque communication. Elles varient donc brusquement dans le temps. La réadaptation des filtres doit donc, en principe, être entièrement refaite pour chaque communication. Et cette réadaptation doit être réalisée très rapidement, ce qui est d'autant plus complexe que le nombre de coefficients à ajuster est important.

Le brevet US-A 3 864 632 décrit un procédé d'initialisation d'un filtre égaliseur, mettant en jeu un signal de test traité selon les techniques utilisant les transformées de Fourier et leurs inverses.

Le brevet US-A 4 027 258 décrit lui aussi un système d'égalisation automatique faisant appel aux techniques des transformées Fourier appliquées à une séquence d'initialisation permettant d'accorder un filtre égaliseur.

Brève description de l'Invention

La présente invention a donc pour objet un procédé et dispositif annuleur d'écho sur ligne téléphonique, relativement longue.

Procédé d'initialisation d'un filtre numérique annuleur de signaux parasites dits d'écho apparaissant dans une installation téléphonique de type analogique et numérique comportant un trajet de circulation dudit écho ledit procédé étant caractérisé en ce qu'il comporte les opérations suivantes:

- envoi dans le trajet d'écho d'une séquence d'échantillons d'un signal à spectre d'amplitude uniforme dit spectre plat;
- récupération d'une séquence d'échantillons du signal d'écho;
- calcul des termes d'une transformée de Fourier rapide de la séquence d'échantillons du signal d'écho;
- rotation de chacun des termes de ladite transformée de Fourier rapide selon un angle prédéterminé selon le rang dudit terme dans la séquence des termes de la transformée de Fourier rapide;
- calcul des termes d'une transformée de Fourier rapide inverse opérée sur les termes obtenus par ladite rotation;
- tri des termes obtenus par ladite transformée inverse pour localisation et mesure d'amplitude du terme d'amplitude maximum de ladite transformée inverse;
- sélection et mesure d'un nombre donné de termes de ladite transformée inverse situés de part et d'autres du terme d'amplitude maximum; et,
- utilisation des informations obtenues par le tri et ladite sélection et mesure, pour initialiser ledit filtre numérique annuleur d'écho.

D'autres objets, caractéristiques et avantages de l'invention ressortiront de la description suivante faite en référence aux dessins annexés qui représentent respectivement:

Fig. 1: un réseau de communication auquel s'applique l'invention.

Fig. 2: un dispositif annuleur d'écho destiné à être initialisé selon le procédé de l'invention.

Fig. 3: un diagramme temporel des séquences d'initialisation du filtre annuleur d'écho.

Fig. 4: un diagramme illustrant le procédé de l'invention.

Fig. 5 et 6: des diagrammes de réponses impulsionnelles du trajet d'écho.

Fig. 7: une représentation plus détaillée du schéma de la figure 2.

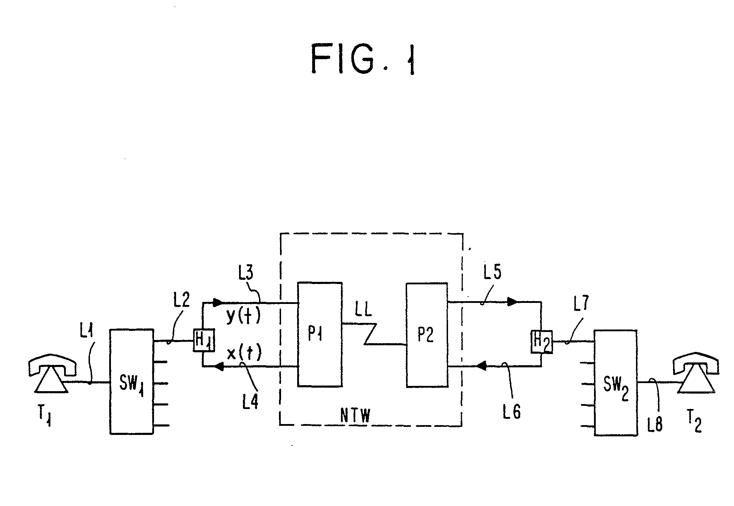

La figure 1 représente un mode de réalisation d'un réseau de communications de type mixte, c'est-à-dire, comportant des sections analogiques et d'autres numériques. Par exemple, la section de réseau analogique entre deux postes téléphoniques T1 et T2 passe à travers des lignes bifilaires bidirectionnelles désignées par L1, L2, L7, L8, des lignes bifilaires unidirectionnelles L3, L4, L5 et L6, des réseaux de commutation publics ou privés SW1, SW2, et des transformateurs hybrides H1 et H2. La section de réseau numérique désignée par NTW comporte notamment deux ensembles de traitement du signal dits processeurs P1 et P2 et une voie de communications numériques LL. Les ensembles P1 et P2 comportent notamment des moyens de conversion analogique/numérique (A/D) (non représentés), des moyens de conversion numérique/analogique (D/A) (non représentés), des moyens de modulation-démodulation (modem) (non représentés) et des moyens de gestion du réseau (non représentés).

Les signaux électriques circulent dans L3 et L4 dans les sens indiqués par des flèches. Donc les signaux issus de T1 et destinés à T2 passent par L1, SW1, L2, H1 et L3. Ceux qui proviennent de T2 et sont destinés à T1 passent par L4, H1, L2, SW1 et L1. Mais ce qui précède n'est vrai qu'en théorie. En pratique, une partie du signal véhiculé par L4 et destiné à T1 passe à travers H1 dans L3 et par conséquent retourne vers T2. Ce signal de retour constitue un signal parasite dit d'écho que l'on se propose d'éliminer à l'aide d'annuleurs d'écho. L'importance de cet écho dépent de l'impédance du circuit situé à gauche de H1 représentant la charge de H1. Cette charge n'est définie que lorsque le trajet T1-H1 est établi.

Comme on l'a indiqué plus haut, le réseau considéré ici est de type mixte. Autrement dit, il comporte une section (NTW) au sein de laquelle les communications se font sous forme dite numérique. Pour ce faire les signaux analogiques concernant T1, aussi bien les signaux de service que les signaux vocaux passent par le dispositif P1. Les conversions A/D et D/A et les opérations modem y sont réalisées en général par microprocesseurs programmés. Le modem pourra être notamment un modem IBM 3865 utilisant les techniques de modulation à double bandes latérales, porteuses en quadrature (DSB-QC). Selon ces techniques, le train de bits à transmettre fourni par le convertisseur A/D (non représenté) est scindé en groupes de bits, chaque groupe contenant un nombre (K) fini de bits, dit (K-Bit). A chaque K-bit le modem fait correspondre un symbole $A_n$ d'une constellation d'un espace défini par deux porteuses en quadrature. L'onde résultant de la combinaison des deux porteuses modulées passe par la voie de communications LL.

La seconde partie du réseau de communication, a savoir celle comportant P2, H2, SW2 est semblable à la partie comportant SW1, H1, P1.

Imaginons que le titulaire du poste téléphonique T1 (on dira tout simplement T1) veuille entrer en contact avec le titulaire du poste T2. Après avoir décroché son combiné, T1 compose un numéro comportant un préfixe dépendant de la position géographique de T2. La valeur du préfixe est utilisée dans le réseau de commutation SW1 pour définir le processeur P1, destiné à cette liaison. Les éléments à l'origine des échos dûs à H1 sont alors parfaitement définis. Le processeur P1 doit cependant tout d'abord engendrer et transmettre un signal dont la tonalité est reconnue par T1 comme une invitation à composer le numéro de T2. Ce que T1 fait. Le processeur P1 recevant ce numéro, le code et le transmet au processeur P2. A la fin de cette transmission, P1 est donc disponible pour s'occuper des problèmes d'annulation d'écho comme on le verra plus loin. On verra que l'opération d'annulation d'écho comporte une phase d'initialisation qui peut démarrer dès que le trajet d'écho est établi, mais doit être très rapide et être terminée avant que la conversation proprement dite entre T1 et T2 ne commence.

Lorsque P2 reçoit les bits de numérotation transmis par P1, il les décode puis appelle T2. Dès que T2 décroche, les éléments constitutifs du trajet d'écho impliquant H2 sont définis. Le décrochage de T2 se traduit par un signal détecté par le processeur P2. A ce moment, et avant le début de la conversation, le processeur P2 devra procéder lui aussi aux opérations d'initialisation d'un annuleur d'écho comme on le verra plus loin.

Les trajet d'écho concernant H1 et H2 sont constitués d'éléments semblables. On se contentera donc de décrire un seul annuleur d'écho et une seule procédure d'initialisation.

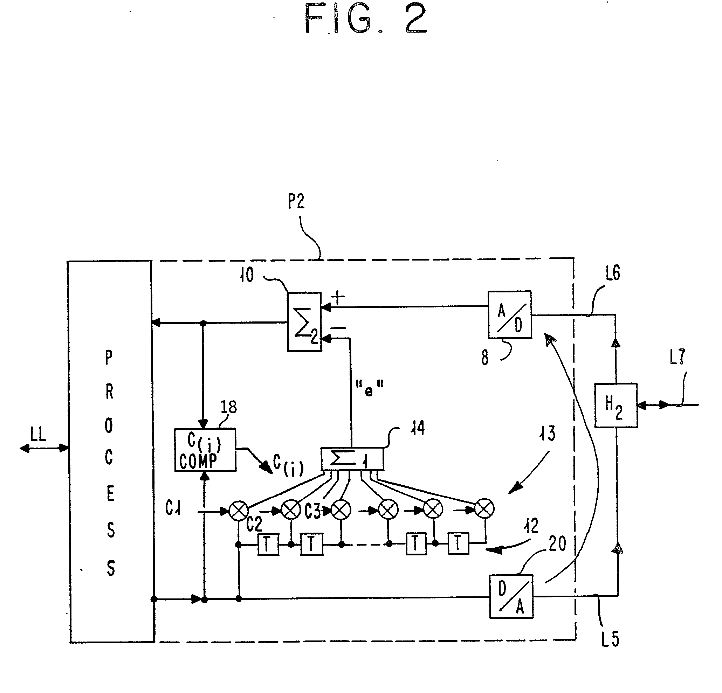

On a représenté sur la figure 2 un dispositif annuleur d'écho de type connu (voir, par exemple l'article de M.M SONDHI, intitulé «An adaptive echo canceller» publié au Bell System Technical Journal, Vol. 46 No 3, March 1967, pp. 497–511), dont la fonction peut être réalisée par le processeur P2. L'annuleur d'écho comporte un filtre numérique engendrant une réplique d'écho «e» laquelle est ensuite soustraite en 10 du signal numérique sortant du convertisseur analogique/numérique 8. Le filtre numérique comporte une ligne à retard 12 à plusieurs prises chacune équipée d'un multiplicateur 13, et un additionneur 14 fournissant le signal «e». Les coefficients $(C_{(i)})$ de multiplication des multiplicateurs 13 sont calculés par analyse des variations du signal sortant du soustracteur 10 dans un dispositif 18 portant la référence $(C_{(i)}$ COMP.). Le calcul des coefficients $C_{(i)}$ peut être effectué en utilisant la méthode dite du gradient citée plus haut. Les autres opérations de traitement du signal sortant du soustracteur 10 et de celui soumis au convertisseur numérique analogique 20, opérations modem par exemple, sont schématisées par PROCESS. Ces opérations qui peuvent être réalisées par le modem IBM 3865, n'interviennent pas dans l'invention. Elles ne seront pas décrites ici plus en détail.

En principe, la longueur de la ligne à retard 12 doit correspondre à l'intervalle de temps nécessaire à l'écho pour retourner dans le processeur P2, donc pour parcourir la distance D/A, H2, A/D. On supposera par la suite que ce temps est toujours inférieur à 16 millisecondes (ms) correspondant environ à une distance de 1 600 km entre P2 et H2. Or le signal numérique traité par les convertisseurs 8 et 20 est échantillonné à la fréquence

$$\frac{1}{T} = 8 \text{ KHz,}$$

fréquence de Nyquist pour un signal dans la bande de fréquences téléphonique.

Dans ces conditions, un signal de durée 16 ms fournit 128 échantillons. Donc en principe le ligne à retard 12 devrait comporter environ 128 cellules à retard (T). Ce qui signifie aussi 128 coefficients $C_{(i)}$ à initialiser et à régler dynamiquement en cours de fonctionnement. La puissance de calcul nécessaire pour cela serait trop importante.

On propose ici une méthode permettant de remédier à ces inconvénients. Dès l'instant où le processeur P2 détecte le décrochage du combiné téléphonique T2 rattaché à L8, il engendre et transmet sur la ligne undirectionnelle d'émission allant vers le convertisseur (D/A) 20 une séquence d'initialisation à spectre plat. De telles séquences ont déjà été décrites dans le brevet français No 2 337 465 délivré à la demanderesse sous le titre «Procédé et dispositif pour déterminer les valeurs initiales des coefficients d'un égaliseur transversal complexe».

Compte tenu des caractéristiques de la séquence d'initialisation, si on désigne par $x_{(n)}$ ses échantillons, la transformée de Fourier de la séquence $[x_{(n)}]$, définie par:

$$X_{(k)} = \sum_{n=0}^{N-1} x_{(n)} \cdot e^{\frac{-j2\Pi kn}{N}}$$

fournirait une séquence:

$$[X_{(k)}] = A \cdot e^{j\Phi_k} = [Re(X_{(K)}) + j\, Im(X_{(k)})]$$

où   $A$ = constante
     $e$ = base des logarithmes népériens
     $j$ = $\sqrt{-1}$
     $\Phi_k$ = la phase de $X_{(k)}$

$Re(X_{(k)})$ et $Im(X_{(k)})$ désignent respectivement les parties réelles et imaginaires de $X_{(k)}$.

On désignera par $h_{(n)}$ la réponse imulsionnelle du circuit suivi par l'écho et l'on supposera $h_{(n)} = 0$ pour $n<0$ ou $n>N-1$, $N$ étant un nombre entier prédéterminé. On désignera aussi par $[z_{(n)}]$ la séquence écho (séquence des échantillons de l'écho) apparaissant à la sortie du convertisseur (A/D) 8 par suite de l'envoi de la séquence $[x_{(n)}]$.

On peut écrire:

$$z_{(n)} = x_{(n)}{}^h{}_{(n)} \tag{2}$$

*désignant une opération de convolution

donc: $Z_{(k)} = X_{(k)} \cdot H_{(k)}$        (3)

où: $Z_{(k)}$, $X_{(k)}$ et $H_{(k)}$ sont respectivement les transformées de Fourier discrète (DFT) qui sont en pratique calculées sous forme de transformée rapide (FFT) de $z_{(n)}$, $x_{(n)}$ et $h_{(n)}$,

d'où l'on déduit:

$$H_{(k)} = \frac{1}{A} Z_{(k)} \cdot e^{-j\Phi_k} \tag{4}$$

$$h_{1(k)} + jh_{2(k)} = \frac{1}{A}\left[z_{1(k)} + jz_{2(k)}\right]\left[\cos\Phi_k - j\,\sin\Phi_k\right] \tag{5}$$

$z_1$ et $z_2$ représentant les composantes de $Z_{(k)}$ et $h_1$ et $h_2$ celles de $H_{(k)}$. On tire:

$$h_{1(k)} = \frac{1}{A}\left[z_{1(k)} \cdot \cos\Phi_k + z_{2(k)} \cdot \sin\Phi_k\right] \tag{6}$$

$$h_{2(k)} = \frac{1}{A}\left[z_{2(k)} \cdot \cos\Phi_k - z_{1(k)} \cdot \sin\Phi_k\right] \tag{7}$$

Donc en soumettant les composantes de $Z_{(k)}$ à une rotation de $-\Phi_k$ dans le domaine des fréquences on obtient les composantes de $H_{(k)}$. Une transformée de Fourier inverse permet alors d'obtenir la réponse impulsionnelle, dans le domaine du temps, recherchée. Les échantillons $h_{(n)}$ de ladite réponse impulsionnelle représentent, les valeurs à attribuer aux coefficients du filtre annuleur d'écho recherché.

On notera que: $h_{(n)} = \dfrac{1}{N} \displaystyle\sum_{k=0}^{N-1} H_{(k)}\, e^{\frac{j2\Pi kn}{N}}$    (8)

où $H_{(k)} = h_{1(k)} + jh_{2(k)}$      (9)

On sait qu'il existe de nombreuses séquences de valeurs complexes $x_{(n)}$ (cf brevet français cité plus haut) obéissant aux conditions fixées plus haut, à savoir telles que leur spectre en fréquence soit pratiquement constant en amplitude. On trouvera ci-dessous un exemple d'une telle séquence normalisée à une amplitude $A = 1024$: Tableau I, lire de gauche à droite et de haut en bas.

### Tableau I

Séquence valeur complexes
Composantes réelles CR

| | | | | | | | |
|---:|---:|---:|---:|---:|---:|---:|---:|
| 1024 | 1024 | 1024 | 1024 | 1024 | 1024 | 1024 | 1024 |
| 0 | −392 | −724 | −946 | −1024 | −946 | −724 | −392 |
| 1024 | 724 | 0 | −724 | −1024 | −724 | 0 | 724 |
| 0 | −946 | −724 | 392 | 1024 | 392 | −724 | −946 |
| 1024 | 0 | −1024 | 0 | 1024 | 0 | −1024 | 0 |
| 0 | −946 | −724 | 392 | −1024 | 392 | 724 | −946 |
| 1024 | −724 | 0 | 724 | −1024 | 724 | 0 | −724 |
| 0 | −392 | 724 | −946 | 1024 | −946 | 724 | −392 |

Tableau I  (suite)

Séquence valeur complexes
Composantes réelles CR

| | | | | | | | |
|---|---|---|---|---|---|---|---|
| 1024 | −1024 | 1024 | −1024 | 1024 | −1024 | 1024 | −1024 |
| 0 | 392 | −724 | 946 | −1024 | 946 | −724 | 392 |
| 1024 | −724 | 0 | 724 | −1024 | 724 | 0 | −724 |
| 0 | 946 | −724 | −392 | 1024 | −392 | −724 | 946 |
| 1024 | 0 | −1024 | 0 | 1024 | 0 | −1024 | 0 |
| 0 | 946 | 724 | −392 | −1024 | −392 | 724 | 946 |
| 1024 | 724 | 0 | −724 | −1024 | −724 | 0 | 724 |
| 0 | 392 | 724 | 946 | 1024 | 946 | 724 | 392 |

Composantes imaginaires CI

| | | | | | | | |
|---|---|---|---|---|---|---|---|
| 0 | 0 | 0 | 0 | 0 | 0 | 0 | 0 |
| 1024 | 946 | 724 | 392 | 0 | −392 | −724 | −946 |
| 0 | 724 | 1024 | 724 | 0 | −724 | −1024 | −724 |
| 1024 | 392 | −724 | −946 | 0 | 946 | 724 | −392 |
| 0 | 1024 | 0 | −1024 | 0 | 1024 | 0 | −1024 |
| 1024 | −392 | −724 | 946 | 0 | −946 | 724 | 392 |
| 0 | 724 | −1024 | 724 | 0 | −724 | 1024 | −724 |
| 1024 | −946 | 724 | −392 | 0 | 392 | −724 | 946 |
| 0 | 0 | 0 | 0 | 0 | 0 | 0 | 0 |
| 1024 | −946 | 724 | −392 | 0 | 392 | −724 | 946 |
| 0 | −724 | 1024 | −724 | 0 | 724 | −1024 | 724 |
| 1024 | −392 | −724 | 946 | 0 | −946 | 724 | 392 |
| 0 | −1024 | 0 | 1024 | 0 | −1024 | 0 | 1024 |
| 1024 | 392 | −724 | −946 | 0 | 946 | 724 | −392 |
| 0 | −724 | −1024 | −724 | 0 | 724 | 1024 | 724 |
| 1024 | 946 | 724 | 392 | 0 | −392 | −724 | −946 |

En pratique, dès détection du décrochage du combiné téléphonique T2, le processeur P2 sera chargé de transmettre vers le convertisseur (D/A) 20 donc vers la ligne unidirectionnelle dite d'émission L5 les composantes réelles (CR) suivies des composantes imaginaires (CI) de la séquence d'initialisation, composantes qui auront au préalable été stockées dans la mémoire (non représentée) de P2. P2 recueille ensuite pour analyse le signal reçu, en écho sur la ligne unidirectionnelle L6 dite ici de réception. L'analyse se fera donc sur les échantillons se présentant à la sortie du convertisseur (A/D) 8. On verra plus loin que pour plus de sécurité, on transmettra de manière répétitive plusieurs séquences successives.

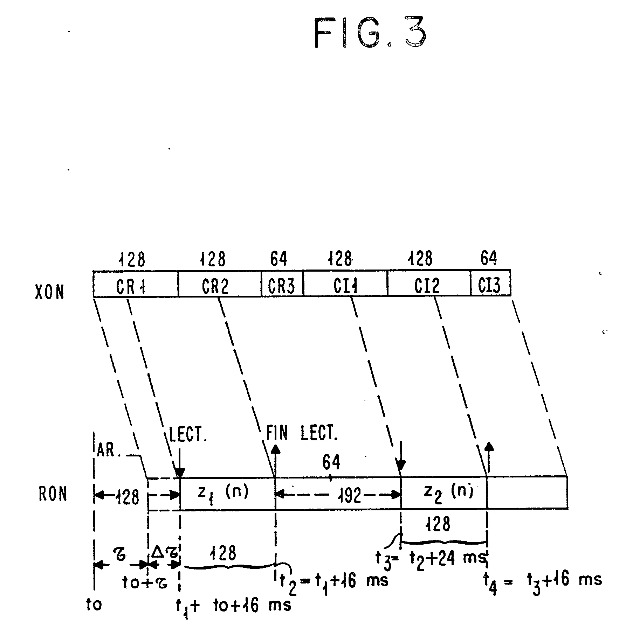

On a représenté sur la figure 3 le diagramme temporel des transmission (XON) et réception (RON) des séquences d'initialisation. On note qu'à l'instant $t_0$ le processeur P2 envoie tout d'abord une séquence réelle CR1 de 128 échantillons (voir tableau I) représentant donc 16 ms de signal. Cette première séquence est suivie d'une deuxième séquence constituée par une répétition de séquence réelle complète (CR2), puis par une troisième constituée par une répétition de séquence réelle partielle (CR3). Cette troisième séquence est formée des 64 premières valeurs de la séquence réelle (CR). Le même processus est ensuite réalisé avec la séquence imaginaire (CI1) de 128 points qui est donc répétée une fois et demi (CI2, CI3). En procédant ainsi, on sera amené à travailler sur une séquence totale d'initialisation de durée multiple de 20 ms. Ceci permet de faciliter la réalisation de cette invention dans un système dans lequel le signal de voix est traité numériquement par segments de durée égale à 20 ms.

Côté réception (RON) le processeur P2 ne se met à l'écoute du signal reçu à l'entrée du convertisseur (A/D) 8 autrement dit ne prélève les échantillons de ce signal qu'à l'instant $t_1 = t_0 +$ 16 ms. Ceci, dans le cas où, suivant l'hypothèse faite plus haut où le circuit d'écho aurait 1600 km environ, le signal met un temps de propagation $\tau$ < 16 ms entre la sortie du processeur P2 de la séquence d'initialisation et le retour de l'écho sur l'entrée dudit processeur, ou plus exactement entre l'entrée du convertisseur 20 et la sortie du convertisseur 8. La lecture en sortie du convertisseur 8 commence donc après le début de réception du bloc CR1. Comme ce bloc se répète, il suffit de garder N = 128 échantillons consécutifs pour avoir un bloc de valeurs réelles reçues $z_{1(n)}$. Ces 128 échantillons correspondent à un bloc de termes de la séquence réelle CR soumise à une permutation circulaire due au déphasage correspondant au retard $\Delta\tau$ entre le début de la réception effective de l'écho et le début de la lecture de l'écho par le processeur P2. Les 128 échantillons de la séquence $Z_{1(n)}$ sont mis en mémoire (MEM) (non représentée sur la figure 3) par le processeur P2. Ce même processeur cesse ensuite d'analyser l'écho durant 24 ms, puis se remet à l'écoute. Il prélève alors 128 échantillons correspondant à la séquence $z_{2(n)}$ formée des termes de la séquence imaginaire CI déphasée. Compte tenu des délais d'interruption entre $z_{1(n)}$ et $z_{2(n)}$, les déphasages et donc les permutations circulaires des termes de même rang (n) des séquences réelles et complexes sont les mêmes. L'ensemble des valeurs $z_{1(n)} + jz_{2(n)} = z_{(n)}$, peut donc être construit et utilisé comme on l'a indiqué plus haut. Ces valeurs vont être utilisées dans le processeur P2 pour calculer les valeurs initiales à donner aux coefficients du filtre annuleur d'écho.

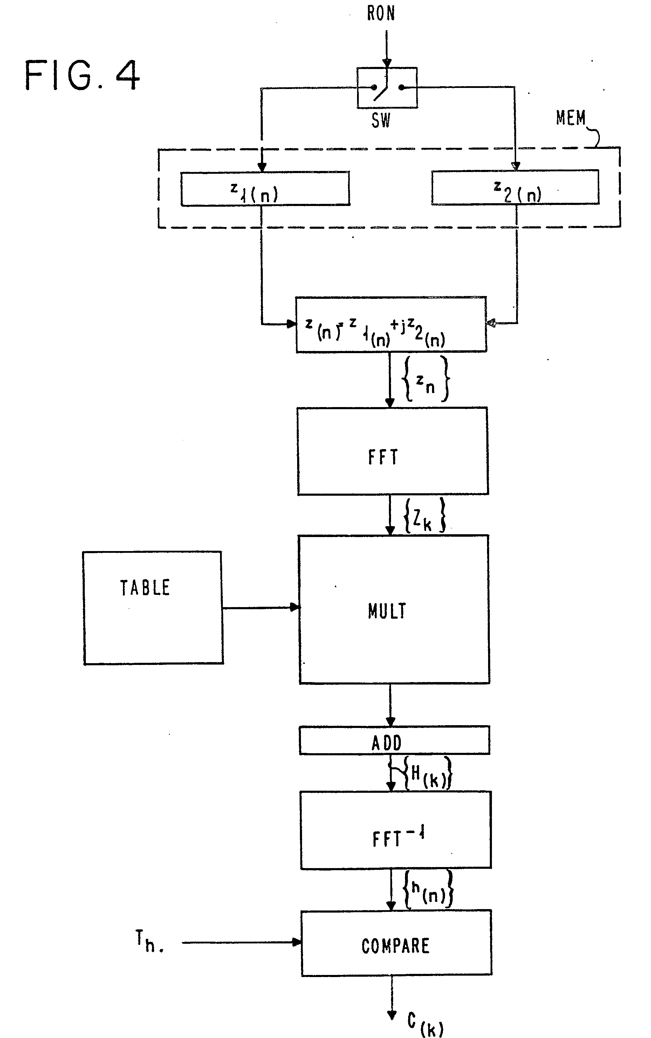

On a schématisé sur la figure 4 les opérations à effectuer dans le processeur P2 pour déterminer les coefficients $C_{(k)}$ d'initialisation du filtre du dispositif annuleur d'écho. La transformée de Fourier rapide (FFT) de la séquence $[z_{(n)}]$ est tout d'abord calculée. Cette opération fournit les termes complexes ou vecteurs $Z_{(k)}$ tels que:

$$Z_{(k)} = \sum_{n=0}^{N-1} z_{(n)} \cdot e^{\frac{-j2\pi n \cdot k}{N}}$$

Les vecteurs $Z_{(k)}$ sont ensuite soumis à une rotation $-\Phi_k$, k = 0, 1, .., 127 désignant le rang du terme $Z_k$ dans la séquence $[Z_k]$ des termes de la transformée de Fourier rapide. Les termes $\Phi_k$ caractérisent la séquence $x_{(n)}$ et sont connus. Ce sont les phases définies telles que:

$$\Phi_k = \text{Arc tg} \frac{\text{Im}(X_{(k)})}{\text{Re}(X_{(k)})}$$

On désigne respectivement par $[z_{1(k)}]$ et $[z_{2(k)}]$ les parties réelle et imaginaire de la séquence $[Z_{(k)}]$. Les séquences $[z_{1(k)}]$ et $[z_{2(k)}]$ sont soumises en MULT à des multiplications par $\sin\Phi_k$ et $\cos\Phi_k$. Les termes $\sin\Phi_k$ et $\cos\Phi_k$ auront au préalable été enregistrés dans une TABLE de mémoire de sinus et cosinus (voir Tableau II).

Tableau II

Sin$\Phi_k$ normalisés à 1024

| | | | | | | | |
|---|---|---|---|---|---|---|---|
| 724 | 759 | 851 | 964 | 1024 | 926 | 569 | −50 |
| 724 | 345 | −200 | −759 | −1024 | −688 | 200 | 964 |
| 724 | 1023 | 569 | −438 | −1024 | −345 | 851 | 688 |
| 724 | −438 | −1004 | 50 | 1024 | −50 | −1004 | 438 |
| 724 | 688 | −851 | −345 | 1024 | −438 | −569 | 1023 |
| 724 | −964 | 200 | 688 | −1024 | 759 | −200 | −345 |
| 724 | −50 | −569 | 926 | −1024 | 964 | −851 | 759 |
| 724 | −926 | 1004 | −1023 | 1024 | −1023 | 1004 | −926 |
| 724 | −759 | 851 | −964 | 1024 | −926 | 569 | 50 |
| 724 | −345 | −200 | 759 | −1024 | 688 | 200 | −964 |
| 724 | −1023 | 569 | 438 | −1024 | 345 | 851 | −688 |
| 724 | 438 | −1004 | −50 | 1024 | 50 | −1004 | −438 |
| 724 | −688 | −851 | 345 | 1024 | 438 | −569 | −1023 |
| 724 | 964 | 200 | −688 | −1024 | −759 | −200 | 345 |
| 724 | 50 | −569 | −926 | −1024 | −964 | −851 | −759 |
| 724 | 926 | 1004 | 1023 | 1024 | 1023 | 1004 | 926 |

Cos$\Phi_k$ normalisés à 1024

| | | | | | | | |
|---|---|---|---|---|---|---|---|
| 724 | 688 | 569 | 345 | 0 | −438 | −851 | −1023 |
| −724 | −964 | −1004 | −688 | 0 | 759 | 1004 | 345 |
| 724 | −50 | −851 | −926 | 0 | 964 | 569 | −759 |
| −724 | −926 | 200 | 1023 | 0 | −1023 | 200 | 926 |
| 724 | −759 | −569 | 964 | 0 | −926 | 851 | −50 |
| −724 | −345 | 1004 | −759 | 0 | 688 | −1004 | 964 |
| 724 | −1023 | 851 | −438 | 0 | 345 | −569 | 688 |
| −724 | 438 | −200 | 50 | 0 | 50 | −200 | 438 |
| 724 | −688 | 569 | −345 | 0 | 438 | −851 | 1023 |
| −724 | 964 | −1004 | 688 | 0 | −759 | 1004 | −345 |
| 724 | 50 | −851 | 926 | 0 | −964 | 569 | 759 |
| −724 | 926 | 200 | −1023 | 0 | 1023 | 200 | −926 |
| 724 | 759 | −569 | −964 | 0 | 926 | 851 | 50 |
| −724 | 345 | 1004 | 759 | 0 | −688 | 1004 | −964 |
| 724 | 1023 | 851 | 438 | 0 | −345 | −569 | −688 |
| −724 | −438 | −200 | −50 | 0 | −50 | −200 | −438 |

On obtient en sortie du multiplicateur MULT, les termes $z_{1(k)}\cos\Phi_k$, $z_{1(k)}\sin\Phi_k$, $z_{2(k)}\cos\Phi_k$ et $z_{2(k)}\sin\Phi_k$. Ces termes sont additionnés en ADD et multipliés par une valeur de gain préenregistrée et égale à $\dfrac{1}{A}$ (on a choisi part exemple A = 1024) pour former:

$$
\text{et} \begin{cases} h_{1(k)} = \dfrac{1}{A}[z_{1(k)}\cos\Phi_k + z_{2(k)}\sin\Phi_k] & (11) \\[3mm] h_{2(k)} = \dfrac{1}{A}[z_{2(k)}\cos\Phi_k + z_{1(k)}\sin\Phi_k] & (12) \end{cases}
$$

Les termes $h_{1(k)}$ et $h_{2(k)}$ représentent respectivement les composantes réelle et imaginaire de la séquence complexe $[H_{(k)}]$. La transformée de Fourier rapide inverse (FFT$^{-1}$) de la séquence $[H_{(k)}]$ fournit la réponse impulsionnelle $[h_{(n)}]$ du circuit ou trajet d'écho.

$$
h_{(n)} = \frac{1}{N}\sum_{k=0}^{N-1} H_{(k)} \cdot e^{\frac{j2\pi k \cdot n}{N}} \tag{13}
$$

En fait, on peut montrer que le retard $\Delta\tau$ se traduit par une rotation $\Delta\Phi$ de la fonction $Z_{(k)}$.

L'effet de cette rotation associé aux autres rotations introduites en MULT, se traduit simplement par un retard de la fonction $h_{(n)}$. Par contre, l'allure de la fonction $h_{(n)}$ n'est pas sensiblement modifiée. On comprendra plus loin que pour les besoins de la présente invention, on puisse négliger le retard $\Delta\tau$ sans inconvénient et donc ne tenir compte que du rang «k» dans la séquence des termes de la transformée de Fourier rapide.

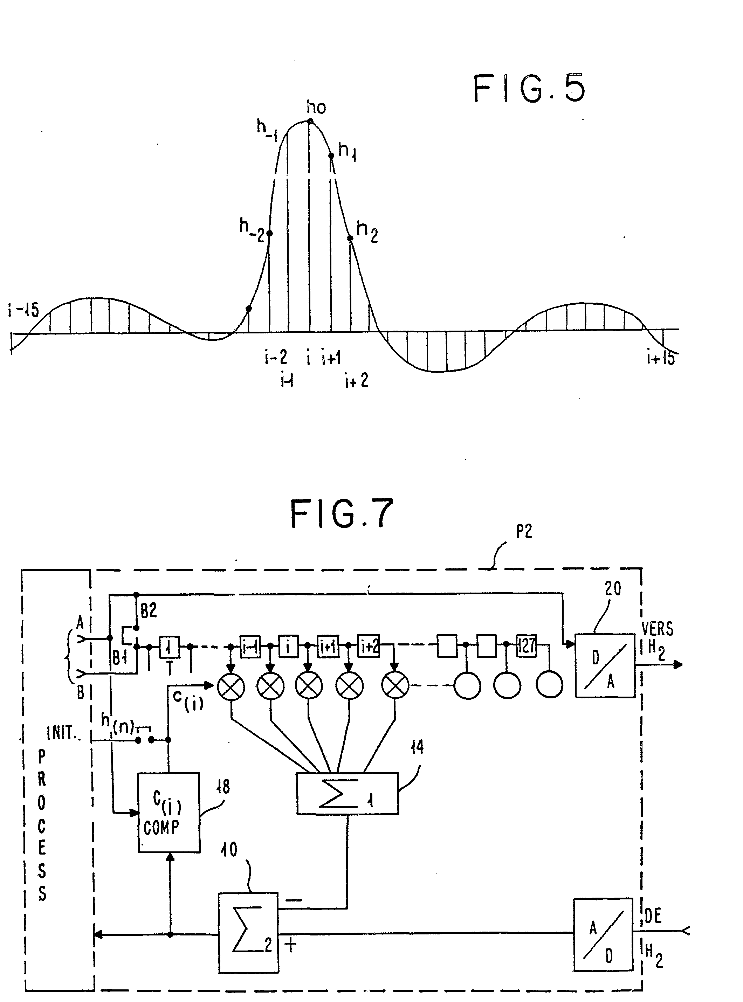

Les échantillons $h_{(n)}$ sont ensuite comparés entre eux en COMPARE. Ceci permet de mesurer et localiser $h_{(n)}$ maximum, donc le centre $h_0$ de la réponse impulsionnelle du trajet d'écho. On prélève alors un nombre donné (par exemple 31) de $h_{(n)}$. Ces termes $h_0$, $h_1$, $h_2$, $h_{-1}$, $h_{-2}$, etc. représentent les valeurs initiales des coefficients $C_{(i)}$ du filtre annuleur d'écho. Ceci permet non seulement de placer correctement le coefficient central $C_{(0)}$ du filtre sur la ligne à retard 12 comme on le verra plus loin, mais encore de limiter le nombre des autres coefficients $C_{(i)}$ à une valeur prédéterminée. On a schématisé sur la figure 5 la réponse impulsionnel du canal d'écho.

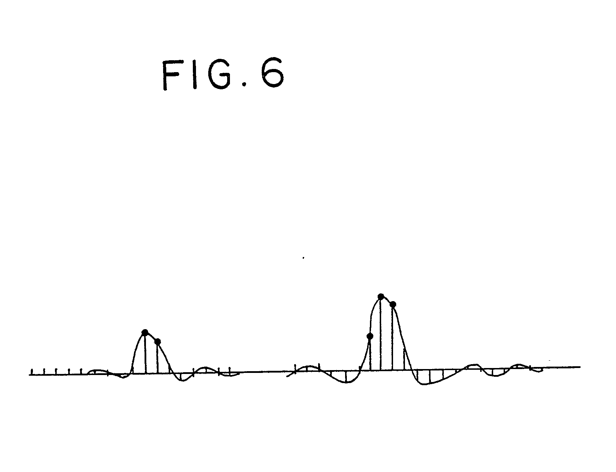

On notera que le procédé de l'invention s'applique parfaitement aux systèmes à échos multiples, du genre schématisé sur la figure 6. Dans ce cas, si l'on désire utiliser un filtre d'écho ayant toujours trente coefficients, on ne retiendra que les trente valeurs de $h_{(n)}$ les plus grandes en valeurs absolues.

Dans tous les cas, il est bon de pouvoir limiter le nombre total de coefficients. Pour ce faire, on peut fixer empiriquement un seul Th et ne conserver que les coefficients dont la valeur absolue est supérieure au seuil.

On a schématisé sur la figure 7, un filtre d'écho dont l'initialisation est réalisée en appliquant le procédé de l'invention. On notera que la ligne à retard du filtre d'écho est pourvue de 128 prises. Seules les trente et une prises à pourvoir de coefficients seront utilisées. A l'initialisation, ces coefficients sont mis à 0, et la séquence schématisée sur la figure 3 est tout d'abord transmise par la borne A (Fig. 7) directement sur l'entrée du convertisseur numérique/analogique 20 à l'instant ($t_0$) où le processeur P2 détecte un décrochage du combiné T2. Seize millisecondes plus tard, la partie PROCESS de P2 se met à l'écoute de la sortie de l'additionneur $\Sigma 2$. Elle prélève alors 128 échantillons du signal sortant de $\Sigma 2$. Ces échantillons constituant la séquence $[z_1(n)]$ sont emmagasinés dans la mémoire MEM (non représentée). Puis P2 interrompt tout prélèvement d'échantillons sortant de $\Sigma 2$ durant 24 ms avant de se remettre à l'écoute durant 16 ms pour prélever les 128 échantillons de $[z_2(n)]$. Le processeur P2 calcule et définit alors les emplacements des coefficients initiaux $h(n)$ du filtre d'écho comme décrit ci-dessus. Autrement dit, il détermine parmi les 128 valeurs de $h(n)$ calculés par la transformée FFT$^{-1}$, le rang du plus grand en valeur absolue. Ce rang définit la position de la prise de la ligne à retard coefficient de multiplication $C(\cdot)$ est affecté de la valeur initiale h0. Cette prise est dite centrale. Les autres coefficients initiaux peuvent donc être affectés de part et d'autre de la prise centrale. Les moyens permettant de fixer les coefficients du filtre annuleur d'écho aux valeurs initiales $h(n)$ calculées ont été symbolisés par une liaison $h(n)$ entre la partie PROCESS de P2 et le filtre, liaison alimentée par une sortie désignée par INIT. Naturellement, ce qui précède suppose un écho simple (voir figure 5). L'homme de l'art imaginera aisément les légères différences de méthode dans le cas d'échos multiples (voir figure 6). Après initialisation du filtre d'écho, la transmission de la parole peut commencer en utilisant l'entrée B de la ligne à retard et en reliant les points B1-B2. Le système passe alors en régime dynamique au cours duquel les coefficients de l'annuleur d'écho sont réglés par la méthode du gradient appliquée par le dispositif 18 fonctionnant de manière conventionnelle.

Bien que l'on ait décrit dans ce qui précède et représenté sur les figures un mode de réalisation préféré de l'invention, il est évident que l'homme de l'art pourra y apporter de nombreuses modifications de forme ou de détail sans pour autant sortir du cadre de ladite invention. En particulier, il pourra adapter la longueur de la séquence complexe à amplitude constante à celle du trajet d'écho, qui pourra être supérieur à 16 ms. Il pourra, de même, et de manière évidente choisir d'utiliser des séquences d'initialisation à termes réels telles que décrites dans le brevet français 2423929 de la demanderesse ou même des séquences de termes dont l'amplitude ne serait pas nécessairement constante et néanmoins appliquer le procédé d'initialisation faisant l'objet de cette invention.

## Revendications

1. Procédé d'initialisation d'un filtre numérique annuleur de signaux parasites dits d'écho apparaissant dans une installation téléphonique de type analogique et numérique comportant un trajet de circulation dudit écho ledit procédé caractérisé en ce qu'il comporte les opérations suivantes:

- envoi dans le trajet d'écho d'une séquence d'échantillons d'un signal à spectre d'amplitude uniforme dit spectre plat;
- récupération d'une séquence d'échantillons du signal d'écho;
- calcul des termes d'une transformée de Fourier rapide de la séquence d'échantillons du signal d'écho;
- rotation de chacun des termes de ladite transformée de Fourier rapide selon un angle prédéterminé selon le rang dudit terme dans la séquence des termes de la transformée de Fourier rapide;
- calcul des termes d'une transformée de Fourier rapide inverse opérée sur les termes obtenus par ladite rotation;
- tri des termes obentus par ladite transformée inverse pour localisation et mesure d'amplitude du terme d'amplitude maximum de ladite transformée inverse;
- sélection et mesure d'un nombre donné de termes de ladite transformée inverse situés de part et d'autre du terme d'amplitude maximum; et,
- utilisation des informations obtenues par le tri et ladite sélection et mesure, pour initialiser ledit filtre numérique annuleur d'écho.

2. Procédé d'initialisation d'un filtre numérique annuleur d'écho selon la revendication 1 caractérisé en ce que ladite séquence à spectre plat est une séquence complexe.

3. Procédé d'initialisation d'un filtre numérique annuleur d'écho selon la revendication 2 caractérisé en ce que l'envoi de la séquence à spectre plat comporte l'envoi successif des composantes réelles et des composantes complexes de ladite séquence complexe.

4. Procédé d'initialisation d'un filtre numérique annuleur d'écho selon la revendication 3 caractérisé en ce que l'envoi desdites composantes réelles et complexes se fait de manière répétitive et selon un ordre prédéterminé.

5. Procédé d'initialisation d'un filtre numérique annuleur d'écho selon la revendication 4 caractérisé en ce que ladite récupération d'une séquence d'échantillons du signal d'écho comporte deux étapes séparées d'un délai prédéterminé pour assurer la séparation de la récupération d'échantillons d'écho dûs à la séquence des composantes réelles de celle des échantillons d'écho dûs à la séquence des composantes complexes émises.

6. Procédé d'initialisation d'un filtre numérique annuleur d'écho selon l'une des revendications 1 à 5, destiné à annuler un écho dû à un retour sur une ligne unidirectionnelle de réception d'un signal émis sur une ligne unidirectionnelle d'émission vers une ligne bi-directionnelle d'émission/réception, à laquelle est rattaché un combiné téléphonique ledit procédé d'initialisation étant caractérisé en ce que:

- ledit envoi sur le trajet d'écho est réalisé par envoi sur ladite ligne unidirectionnelle d'émission de séquences de valeurs numériques représentant les composantes réelles et complexes d'un signal d'initialisation à spectre plat; et,
- ladite récupération est réalisée par récupération sur ladite ligne unidirectionnelle de réception de deux séquences d'échantillons reçues successivement à des instants prédéterminés séparés d'un intervalle de temps lui-même prédéterminé.

7. Procédé pour initialiser les coefficients d'un filtre numérique annuleur d'écho selon la revendication 6, et destiné à un réseau téléphonique de type analogique et numérique comportant un processeur de signal numérique, ledit procédé étant caractérisé en ce que ledit envoi sur le trajet d'écho est déclenché par la détection par ledit processeur du décrochage du combiné téléphonique rattaché à ladite ligne bidirectionnelle d'émission réception.

8. Procédé d'initialisation d'un filtre numérique selon la revendication 6 ou 7 caractérisé en outre en ce que ledit tri comporte la localisation et mesure du terme d'amplitude maximum de ladite transformée inverse ainsi que la mesure d'un nombre prédéterminé de termes situés de part et d'autre dudit terme d'amplitude maximum.

9. Procédé d'initialisation d'un filtre numérique selon la revendication 6 ou 7 caractérisé en outre en ce que ledit tri comporte les localisations des termes dont l'amplitude est supérieure à un seuil prédéterminé dans la séquence des termes de ladite transformée inverse.

10. Procédé d'initialisation d'un filtre numérique selon la revendication 6 ou 7 caractérisé en outre en ce que ledit tri comporte les localisations et mesure d'un nombre prédéterminé de termes pris parmi les termes d'amplitudes les plus grandes de ladite transformée inverse.

11. Système de communication téléphonique de type mixte comportant un dispositif annuleur des échos dûs au retour sur une ligne bifilaire unidirectionnelle de réception (L3) d'une fraction du signal émis sur une ligne unidirectionnelle d'émission (L4) vers une ligne bidirectionnelle d'émission/réception (L2), le passage entre lignes unidirectionnelles et bi-directionnelle se faisant à travers un transformateur hybride (H1), ledit dispositif annuleur d'écho comportant un filtre numérique transversal à coefficients ajustables (13) et à ligne à retard (12) introduisant un retard total correspondant au temps de propagation de l'écho, et des moyens d'initialisation desdits coefficients caractérisés en ce qu'ils comportent:

- des moyens (PROCESS) de détection du décrochage d'un combiné téléphonique relié à ladite ligne bidirectionnelle;
- des moyens (PROCESS, A) d'envoi sur ladite ligne unidirectionnelle d'émission en réponse à ladite détection de décrochage de séquences de N valeurs numériques (N étant un nombre prédéterminé) représentant les composantes réelles (CR1, CR2, CR3) et complexes (CI1, CI2, CI3) d'un signal d'initialisation à spectre plat;
- des moyens de récupération reliés à ladite ligne unidirectionnelle de réception pour récupérer et stocker deux séquences d'échantillons d'écho (z1(n), z2(n)) reçus successivement à des instants prédéterminés séparés entre elles d'un intervalle de temps lui-même prédéterminé;
- des moyens (PROCESS) de calcul de transformée de Fourier rapide reliés auxdits moyens de récupération et calculant la transformée d'une séquence complexe obtenue par combinaison des deux séquences d'écho stockées;
- une table contenant les valeurs $\sin\Phi_k$ et $\cos\Phi_k$ pour $k = 0, 1, \ldots, N-1$
- des moyens de multiplication (PROCESS) reliés auxdits moyens de détermination de transformée de Fourier rapide et à ladite table, de manière à soumettre les termes de ladite transformée à des rotations de $-\Phi_k$;
- des moyens de calcul de transformée de Fourier inverse reliés auxdits moyens de multiplication;
- des moyens de comparaison reliés auxdits moyens de calcul de transformée inverse pour trier les termes de la transformée inverse et en déduire les positions et valeurs initiales des coefficients recherchés.

**Patentansprüche**

1. Verfahren der Initialisierung eines digitalen Filters für die Beseitigung von sogenannten Echo-Störsignalen, die in einer Telefonanlage vom Analogtyp und vom digitalen Typ auftreten, welche einen Umlaufweg des besagten Echos enthält, besagtes Verfahren dadurch gekennzeichnet, dass es folgende Vorgänge enthält:

- Aussenenden einer Sampling-Sequenz eines Signals mit gleichmässigem Amplitudenspektrum, einem sogenannten flachen Spektrum;
- Rückgewinnung einer Sampling-Sequenz des Echo-Signals;
- Berechnung der Ausdrücke einer schnellen Fourier'schen Transformierten der Sampling-Sequenz des Echo-Signals;
- Drehung eines jeden der Ausdrücke der besagten schnellen Fourier'schen Transformierten nach einem vorgegebenen Winkel je nach der Rangfolge des besagten Ausdrucks in der Sequenz der Ausdrücke der schnellen Fourier'schen Transformierten;
- Berechnung der Ausdrücke einer schnellen Rücktransformierten nach Fourier, ermittelt nach den durch besagte Drehung erhaltenen Ausdrücken;
- Sortierung der durch die besagte Rücktransformierte erhaltenen Ausdrücke für die Lokalisierung und Messung der Amplitude des Ausdrucks mit der maximalen Amplitude der besagten Rücktransformierten;
- Auswahl und Messung einer vorgegebenen Zahl Ausdrücke der besagten Rücktransformierten zu beiden Seiten des Ausdrucks mit der maximalen Amplitude; und
- Verwendung der durch die Sortierung und besagte Auswahl und Messung erhaltenen Informationen für die Initialisierung des besagten digitalen Echo-Löschfilters.

2. Verfahren der Initialisierung eines digitalen Echolöschfilters gemäss Anspruch 1, dadurch gekennzeichnet, dass besagte Sequenz mit flachem Spektrum eine komplexe Sequenz ist.

3. Verfahren der Initialisierung eines digitalen Echofilters gemäss Anspruch 2, dadurch gekennzeichnet, dass die Aussendung der Sequenz mit flachem Spektrum die aufeinanderfolgende Aussendung der Energiekomponenten und der komplexen Komponenten der besagten komplexen Sequenz enthält.

4. Verfahren der Initialisierung eines digitalen Echolöschfilters gemäss Anspruch 3, dadurch gekennzeichnet, dass die Aussendung der besagten Energiekomponenten und komplexen Komponenten wiederholt in einer vorgegebenen Reihenfolge vorgenommen wird.

5. Verfahren der Initialisierung eines digitalen Echolöschfilters gemäss Anspruch 4, dadurch gekennzeichnet, dass besagte Rückgewinnung einer Sampling-Sequenz des Echosignals zwei getrennte Stufen mit einer vorgegebenen Frist enthält, um die Trennung der Rückgewinnung der Echoproben, die durch die Sequenz der Energiekomponenten bedingt sind, von der der Echoproben, die durch die Sequenz der ausgesandten komplexen Komponenten bedingt sind, zu gewährleisten.

6. Verfahren der Initialisierung eines digitalen Echolöschfilters gemäss einem der Ansprüche 1 bis 5, dafür bestimmt, ein Echo zu löschen, das durch eine Rückkehr auf eine Einrichtungs-Empfangsleitung eines Signals, das auf einer Einrichtungssendeleitung ausgesandt wurde, auf eine Zweirichtungssende- und Empfangsleitung bedingt ist, an die ein Telefonhörer angeschlossen ist, wobei besagtes Initialisierungsverfahren dadurch gekennzeichnet ist, dass:
- besagte Aussendung auf den Echoweg durch Aussendung von Sequenzen digitaler Werte auf die besagte Einrichtungssendeleitung bewirkt wird, welche die Energiekomponenten und komplexen Komponenten eines Initialisierungssignals mit flachem Spektrum darstellen; und
- besagte Rückgewinnung durch Rückgewinnung von zwei Sampling-Sequenzen an besagter Empfangsleitung in einer Richtung ausgeführt wird, die gleichzeitig zu vorgegebenen Zeitpunkten empfangen werden, welche durch ein ebenfalls vorgegebenes Zeitintervall getrennt sind.

7. Verfahren für die Initialisierung der Beiwerte eines digitalen Echolöschfilters gemäss Anspruch 6, für ein Analog- und Digitaltelefonnetz mit einem Digitalsignalprozessor, wobei das besagte Verfahren dadurch gekennzeichnet ist, dass die besagte Aussendung auf den Echoweg durch Detektion des Abhängens des Telefonhörers durch den besagten Prozessor ausgelöst wird, wenn dieser Hörer der besagten Sende- und Empfangsleitung mit zwei Richtungen zugeordnet ist.

8. Initialisierungsverfahren eines digitalen Filters gemäss Anspruch 6 oder 7, ferner dadurch gekennzeichnet, dass die besagte Sortierung die Lokalisierung und Messung des Ausdrucks mit maximaler Amplitude der besagten Rücktransformierten enthält, sowie die Messung einer vorgegebenen Anzahl Ausdrücke zu beiden Seiten des besagten Ausdrucks mit maximaler Amplitude.

9. Verfahren der Initialisierung eines digitalen Filters gemäss Anspruch 6 oder 7, ferner dadurch gekennzeichnet, dass die besagte Sortierung die Lokalisierung der Ausdrücke enthält, deren Amplitude eine vorgegebene Schwelle übersteigt, in der Sequenz der Ausdrücke der besagten Rücktransformierten.

10. Initialisierungsverfahren eines digitalen Filters gemäss Anspruch 6 oder 7, dadurch gekennzeichnet, dass die besagte Sortierung die Lokalisierungen und die Messung einer vorgegebenen Anzahl Ausdrücke enthält, welche unter den Ausdrücken mit den grössten Amplituden der besagten Rücktransformierten gewählt werden.

11. Fernsprechsystem gemischten Typs mit einer Unterdrückvorrichtung für die Echos, die durch die Rückleitung auf eine Zweidrahtempfangsleitung in einer Richtung (L3) eines Teils des auf einer Sendeleitung (L4) mit einer Richtung zu einer doppelt gerichteten Empfangs- und Sendeleitung (L2) ausgesandten Signals bedingt sind, wobei der Übergang zwischen Einrichtungs- und Doppelrichtungsleitungen durch einen hybriden Transformator (H1) erfolgt und besagte Echolöschvorrichtung einen digitalen Filter in Querrichtung mit verstellbaren Beiwerten (13) und mit Verzögerungsleitung (12) enthält, so dass eine Gesamtverzögerung eingeführt wird, die der Echoausbreitungszeit entspricht, und Initialisierungsmittel der besagten Beiwerte, dadurch gekennzeichnet, dass sie enthalten:

– Mittel (PROCESS) für die Detektion des Abhängens eines Telefonhörers, der an die besagte doppelt gerichtete Leitung angeschlossen ist;
– Mittel (PROCESS, A) der Aussendung auf besagte Einrichtungssendeleitung in Antwort auf besagte Abhängdetektion von Sequenzen mit N Zahlenwerten (wobei N eine vorgegebene Zahl ist), welche die wirklichen Komponenten (CR1, CR2, CR3) und die komplexen Komponenten (CI1, CI2, CI3) eines Initialisierungssignals mit flachem Spektrum darstellen;
– Mittel, in Verbindung mit der besagten Empfangsleitung in einer Richtung, für die Rückgewinnung und Speicherung von zwei Echosamplingsequenzen (z1(n), z2(n)), die nacheinander zu vorgegebenen Zeitpunkten empfangen werden, die voneinander durch ein ebenfalls vorgegebenes Zeitintervall getrennt sind:

– und Mittel (PROCESS) für die Berechnung der Fourier'schen schnellen Transformierten, die an besagte Rückgewinnungsmittel angeschlossen sind und die Transformierte einer komplexen Sequenz berechnen, welche durch Kombination von zwei gespeicherten Echosequenzen erhalten wurde;
– eine Tabelle mit den Werten $\sin_k$ und cos h für k: 0,1,…, N–1
– Vervielfältigungsmittel (PROCESS), die mit besagten Mittel der Bestimmung der schnellen Fourier'schen Transformierten und mit der besagten Tabelle verbunden sind, so dass die Ausdrücke der besagten Transformierten Drehungen um $-\Theta_k$ unterzogen werden;
– Mittel für die Berechnung der Fourier'schen Rücktransformierten, die mit den besagten Vervielfältigungsmitteln verbunden sind;
– Vergleichsmittel, die mit den besagten Mitteln der Berechnung der Rücktransformierten verbunden sind, um die Ausdrücke der Rücktransformierten zu sortieren und daraus die Anfangspositionen und Werte der gesuchten Beiwerte abzuleiten.

## Claims

1. A method of initializing a digital filter for cancelling noise signals termed echoes that occur in an analog and digital type of telephone installation including an echo signal path, said method being characterized in that it includes the steps of:
– sending over the echo path a sequence of samples of a signal exhibiting a uniform-amplitude spectrum termed flat spectrum,
– collecting a sequence of samples of the echo signal,
– calculating the terms of a fast Fourier transform of the sequence of echo signal samples,
– rotating each of the terms of said fast Fourier transform by a predetermined angle according to the rank of said term in the sequence of terms of the fast Fourier transform,
– calculating the terms of an inverse fast Fourier transform of the terms obtained through said rotation,
– sorting the terms yielded by said inverse transform to determine the position and measure the amplitude of the maximum-amplitude term of said inverse transform,
– selecting and measuring a given number of terms of said inverse transform that are located on both sides of the maximum-amplitude term, and
– using the information provided by said sorting step and said selecting and measuring step to initialize said digital echo canceller filter.

2. A method of initializing a digital echo canceller filter according to claim 1, characterized in that said flat-spectrum sequence is a complex sequence.

3. A method of initializing a digital echo canceller filter according to claim 2, characterized in that the transmission of the flat-spectrum sequence includes the successive transmission of the real and imaginary components of said complex sequence.

4. A method of initializing a digital echo canceller filter according to claim 3, characterized in that the real and imaginary components are transmitted in a repetitive manner and in a predetermined order.

5. A method of initializing a digital echo canceller filter according to claim 4, characterized in that said step of collecting a sequence of echo signal samples comprises two steps separated by a predetermined time interval to cause the collection of echo signal samples relating to the sequence of real components to be separated from that of echo signal samples relating to the sequence of transmitted imaginary components.

6. A method of initializing a digital echo canceller filter according to any one of claims 1 to 5, used for cancelling an echo due to the return over a Receive unidirectional line of a signal sent over a unidirectional Transmit line to a bidirectional Transmit/Receive line to which a telephone handset is connected, said method being characterized in that:
- said transmission over the echo path is performed by sending over said unidirectional Transmit line sequences of digital values representing the real and imaginary components of a flat-spectrum initialization signal, and
- said collection is performed by collecting on said unidirectional Receive line two sequences of samples successively received at predetermined times separated by a predetermined time interval.

7. A method of initializing the coefficients of a digital echo canceler filter according to claim 6, used in an analog and digital type of telephone network including a digital signal processor, said method being characterized in that said transmission over the echo path is initiated when said processor detects the off-hook condition of the telephone handset connected to said bidirectional Transmit/Receive line.

8. A method of initializing a digital filter according to claim 6 or 7, characterized in that said sorting step further includes the steps of determining the position and measuring the maximum-amplitude term of said inverse transform and measuring a predetermined number of terms located on both sides of said maximum-amplitude term.

9. A method of initializing a digital filter according to claim 6 or 7, characterized in that said sorting step further includes the step of determining the positions of those terms the amplitude of which exceeds a predetermined threshold in the sequence of terms of said inverse transform.

10. A method of initializing a digital filter according to claim 6 or 7, characterized in that said sorting step further includes steps of determining the position and measuring a predetermined number of terms selected from those of said inverse transform which exhibit the higher amplitudes.

11. A telephone communication system of a mixed type including a device for cancelling echoes due to the return on a unidirectional two-wire Receive line (L3) of a fraction of the signal sent over a unidirectional Transmit line (L4) to a bidirectional Transmit/receive line (L2), with the transfers between said unidirectional and bidirectional lines taking place through a hybrid transformer (H1), said echo canceling device including a transverse digital filter with adjustable coefficients (13) and a delay line (12) introducing a total delay corresponding to the propagation time of the echo, and means for initializing said coefficients, characterized in that said means includes:
- means (PROCESS) for detecting the off-hook condition of a telephone handset connected to said bidirectional line,
- means (PROCESS, A) responsive to the detection of said off-hook condition to send over said unidirectional Transmit line sequences of N digital values (with N being a predetermined number) representing the real components (CR1, CR2, CR3) and the imaginary components (CI1, CI2, CI3) of a flat-spectrum initialization signal,
- collection means connected to said unidirectional Receive line for collecting and storing two sequences of echo signal samples (z1(n), z2(n)) successively received at predetermined times, said sequences being separated by a predetermined time interval,
- fast Fourier transform calculating means (PROCESS) connected to said collection means for calculating the transform of a complex sequence obtained by combining the two stored sequences of echo signal samples,
- a table containing the values $\sin\Phi_k$ and $\cos\Phi_k$, for $k = 0, 1, ..., N-1$,
- multiplication means (PROCESS) connected to said fast Fourier transform calculating means and to said table, for rotating the terms of said transform by $-\Phi_k$,
- inverse Fourier transform calculating means connected to said multiplication means,
- comparison means connected to said inverse transform calculating means for sorting the terms of said inverse transform and deriving therefrom the locations and the initial values of the desired coefficients.

# FIG. 1

# FIG. 2

# FIG. 3

# FIG. 4

RON

SW

MEM

$z_{1(n)}$   $z_{2(n)}$

$z_{(n)} = z_{1(n)} + j z_{2(n)}$

$\{z_n\}$

FFT

$\{Z_k\}$

TABLE → MULT

ADD

$\{H_{(k)}\}$

$FFT^{-1}$

$\{h_{(n)}\}$

$T_h.$ → COMPARE

$C_{(k)}$

# FIG.5

# FIG.7

# FIG. 6